# EUROPEAN PATENT APPLICATION

(11) **EP 1 992 423 A2**
(43) Date of publication of application: **19.11.2008**
(21) Application number: 08008930.3
(22) Date of filing: 14.05.2008
(51) Int. Cl.: B08B 5/02, C03C 23/00

(54) **Method for cleaning a torch and flame treatment assembly**

(30) Priority: 16.05.2007 DE 102007023032
(71) Applicant: Werner Kammann Maschinenfabrik GmbH & Co. KG, 32257 Bünde (DE)
(72) Inventor: Heidenreich, Horst, 32278 Kirchlengern (DE)
(74) Representative: Wiebusch, Manfred

(57) **Abstract**

A method for cleaning a work surface (22) of a torch (10) which serves for name treatment of objects (12). characterised in that the cleaning of the work surface (22) is performed during operation of the torch (10) in several phases in a time succession, and in that only a fraction (40) of the work surface is cleaned in each phase.

## Description

The invention relates to a method for cleaning a work surface of a torch which serves for flame treatment of objects, and to a flame treatment assembly adapted to carry out this method.

Flame treatment is a frequently used method for surface treatment of objects, for example, in order to remove contaminants from the surface of the object by means of an oxidising flame or a plasma flame or in order to deposit substances that are contained in the flame on the surface. As an example, EP 1 148 036 B1 discloses a method wherein the surface of objects made of glass, ceramics or the like is treated first with an oxidising flame and then with a silicatising flame, so that the surface may then more readily be printed on with printing ink. The object surface to be treated is moved past the torch which has a work surface that faces towards the object and from which the flame is jetted out onto the object via one or several nozzles.

In some flame treatment procedures, a reaction of substances contained in the flame results in the formation of microscopic solid particles which agglomerate to larger particles and are then deposited as dust on surfaces in the surroundings of the torch and on the torch itself. In this way, a surface treat-meant with a silicatising flame, for example, produces a fine white dust consisting of silicon oxides.

This dust may be removed from the surroundings of the torch by means suitable suction devices. However, since the dust is also deposited on the work surface of the torch, it is necessary to clean the work surface from time to time in order to assure a proper function of the torch and to be able to meet the desired parameters for the flame treatment of the objects. The torch may for example be cleaned mechanically by means of a brush or the like. To that end, however, it is generally necessary to deactivate the torch or at least to interrupt the flame treatment for the duration of the cleaning process.

Consequently, the necessity to clean the torch in certain intervals results in a decline in productivity, and especially in flame treatment assemblies that are integrated into larger production lines and in which the objects to be treated are fed through in close succession, the necessary interruptions of operation give raise to serious problems.

In principle, it is possible to maintain a non-interrupted operation by providing a plurality of torches which are employed alternatingly, so that, while one torch is being cleaned, the task thereof may be taken over by another torch. However, this solution requires markedly increased installation costs.

It is therefore an object of the invention to provide a method for cleaning the work surface of a torch, that permits a largely uninterrupted operation of the torch.

According to the invention, this object is achieved by performing the cleaning of the work surface during operation of the torch in several phases in a time sequence, and by cleaning in each phase only a fraction of the work surface.

Since, in accordance with this method, the cleaning process will always affect only a fraction of the work surface of the torch, the remaining part of the work surface, which will generally be significantly larger, is not affected by the cleaning process, so that the operation of the torch can be continued with this part of the work surface. In this way, it is possible to save at least the time needed for switching off the torch and for later igniting the same once again. The part of the work surface that is affected by the cleaning process may also be kept so small that the cleaning process has no significant influence on the geometry of the flame, so that the flame treatment of the objects may also be continued during the cleaning phases.

Further developments of the invention are indicated in the dependent claims.

The different cleaning phases, either of which servers for cleaning another portion of the work surface of the torch, may continuously merge into one another, for example, by moving a cleaning device continuously over the work surface of the torch. However, an intermittent operation in which the cleaning device is moved step-wise along the work surface or in which cleaning devices that are alined along the work surface are activated one after the other is also possible. When all parts of the work surface have been cleaned, a new cleaning cycle my start either at once or after a working phase in which the torch is not cleaned.

Likewise, the individual cleaning phases may be separated by smaller or larger intervals in which no cleaning process is performed. This has the advantage that the necessary cleaning devices need to be exposed to the flame only for a short time during each phase and will then have time enough to cool down before the next phase starts.

For the cleaning process as such, it is possible, in principle, to use any known technique, e. g. mechanical cleaning by means of a brush, vacuum cleaning or blow cleaning of the work surface with compressed air. In combination with a vacuum cleaning device which serves for keeping objects in the surroundings of the torch dust-free, it is particularly useful to clean the work surface of the torch with compressed air, because, then, the dust which is removed from the work surface of the torch by means of the compressed air can readily be sucked away with the vacuum cleaning device. Moreover, by employing a suitable nozzle, the compressed air may very easily be concentrated onto a sufficiently small portion of the work surface.

During flame treatment of relatively small objects like bottles or the like that are supplied in close succession, it is of course convenientwhen the short intervals in which the object to be treated is exchanged are used for cleaning phases. Even when only a little time window exists between the discharge of an object that has been flame-treated and the supply of a new object, this time window may in generally accommodate at least one cleaning phase, because the time required for cleaning a sufficiently small fraction of the work surface is also quite short. Thus, it is possible, in principle, to perform the emtire cleaning process during the change of the object, so that the flame treatment may be performed at times other than the cleaning phases and, accordingly, with non-reduced power of the torch.

On the other hand, when the surface of the object needs to be exposed to the flame of the torch for a relatively long time, it is also possible to carry out one or more cleaning phases or even a complete cleaning cycle during the time in which the torch is held stationary relative to the object. Since the cleaning process in each phase will only cause a short-term and locally restricted disturbance of the flame, the cleaning process will eventually have no effect on the result of the flame treatment.

According to another embodiment, the torch is moved relative to the object during the flame treatment, so that it scans the surface to be treated while the torch is cleaned simultaneously. The fraction of the work surface that is cleaned in the individual cleaning phases is then kept so small that the disturbance of the flame caused thereby becomes negligible.

The invention provides also a flame treatment assembly that is adapted for carrying out the method that has been described above.

An embodiment example will now be described in detail in conjunction with the drawings, wherein:
- Fig. 1: is a schematic perspective view of essential parts of a flame treatment assembly adapted for carrying out the method according to the invention;
- Figs. 2 and 3: are more detailed schematic perspective views of a tirch of the assembly according to Fig. 1 during different cleaning phases; and
- Figs. 4 and 5: show flame profiles for the cleaning phases shown in Figs. 2 and 3.

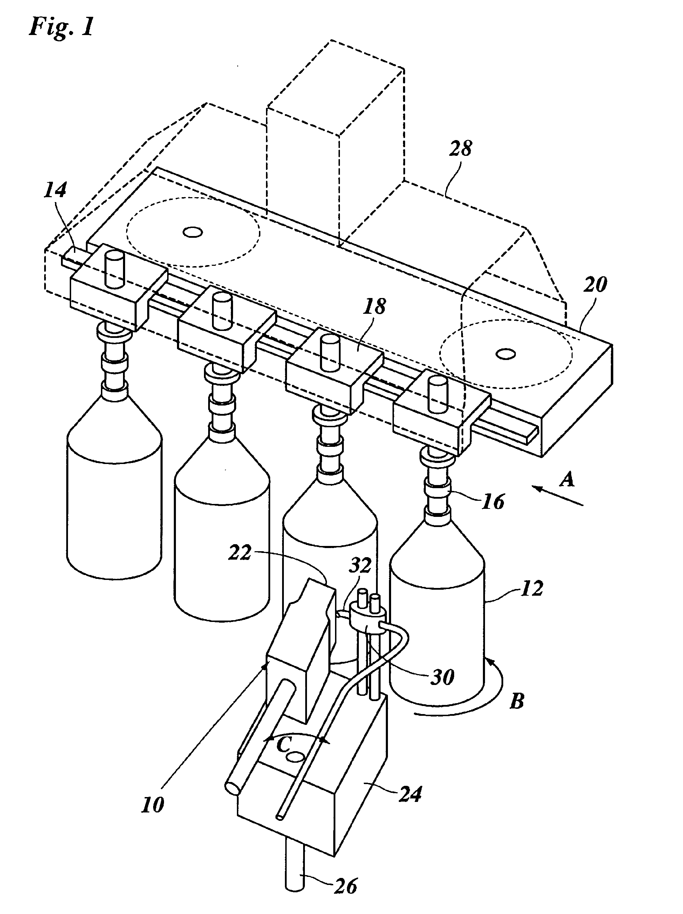

The flame treatment assembly shown in Fig. 1 comprises a torch 10 and serves for flame treatment of objects, glass bottles 12 in this example, that are suspended from a conveyer 14 and are moved past the torch 10 in close succession in the direction of an arrow A. The neck of each bottle 12 is held by a jig 16 that is supported on a holder 18 so as to be rotatable about its vertical longitudinal axis, the holder 18 being in turn supported on the conveyer 14. A rotary drive mechanism 20 is disposed at the conveyer 14 for causing the jigs 16 and, consequently, the bottles 12 to rotate (arrow B).

The torch 10 has a work surface 22 that is elongated in vertical direction and, in Fig. 1. is facing away from the viewer and towards the peripheral surface of the bottle 12, and from which a silicatising flame which has a correspondingly elongated shape is jetted out onto the peripheral surface of the bottles 12. Thanks to the ratation of the bottles 12, the flame may scan a larger peripheral portion or even the entire periphery of the bottle 12, so that surface zones of the bottles, where an impression shall be applied in a later stage, may be pre-treated with the silicatising flame.

By means of the conveyer 14, the bottles may be supplied intermittently. In the example shown, however, the conveyer 14 conveys the bottles 12 with constant speed, so that they are continuously moved past the torch 10. The torch 10 is mounted on a pivoting rig 24 that is pivotable about an axis 26 (double arrow C) and is driven such that the work surface 22 follows the movement of each individual bottle 12 along the conveyer 14 for a certain distance and then swivels back into the start position relatively quickly so as to tread the next bottle. During this process, the work surface 22 is facing the peripheral surface of each individual bottle 12 for such a long time that the bottle may perform a complete revolution and may thus be flame-treated on its entire periphery.

Above the conveyer 14, there is provided an vacuum cleaning device 28 which serves for removing silicon oxide dust, that is produced in the flame of the torch and is deposited on surfaces in the surroundings of the torch, from these surfaces. The suction created by the vacuum cleaning device is however not sufficient for removing dust from the work surface 22 of the torch.

For this reason, a cleaning device which serves specifically for cleaning the work surface 22 of the torch has been mounted on the pivoting rig 24. This cleaning device comprises a cleaning head 30 which holds a nozzle 32 for compressed air and directs the same onto a portion of the work surface 22 and is height-adjustable relative to the torch 10 by means of a drive mechanism accommodated in the pivoting rig 24, so that it may scan the entire work surface 22. The nozzle 32 directs a jet of compressed air onto the work surface 22 in such a manner that the air jet passes over the entire width of this surface and removes dust therefrom, while, in height direction, it extends only over the small fraction of the work surface, e. g. over less than 1/5 or preferably less than 1/10 of the total height. In this way, it is possible to activate the nozzle 32 while the torch is operating, without the flame being extinguished.

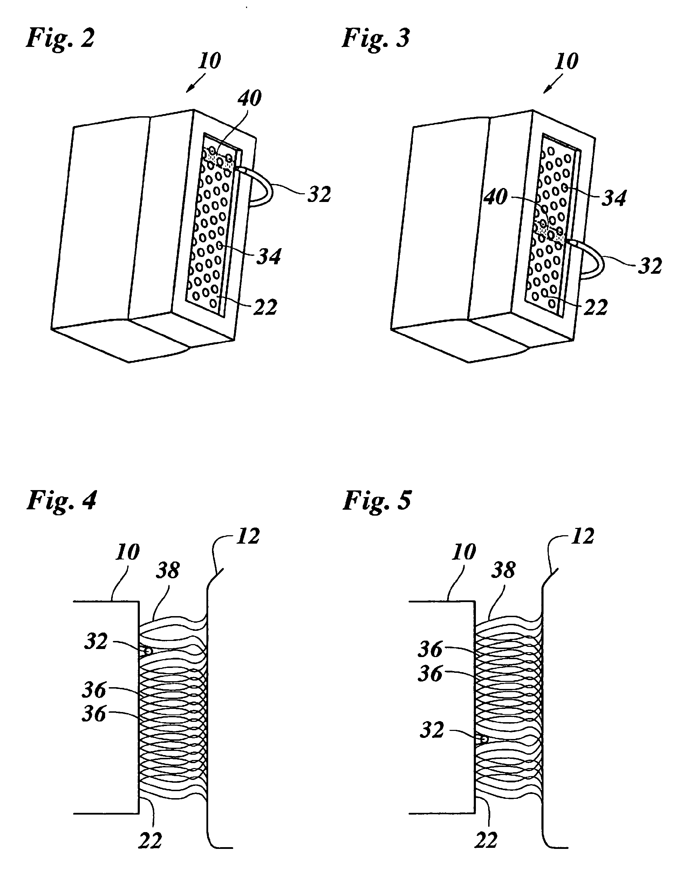

In Figs. 2 and 3 the torch 10 has been shown in a view from a perspective in which the work surface 22 is visible. This work surface has an array of nozzles 34 which, in operation, eject partial flames 36 that unite to form a common flame 38, as has been shown in Figs. 4 and 5. The tip end of the name 38 impinges on the surface of the bottle 12 and is flattened thereby.

Figs. 2 and 4 on the one hand and Figs. 3 and 5 on the other hand illustrate different cleaning phases, in which the compressed air nozzle 32 is located in a different (height) position. In each position of the nozzle 32, the air jet created thereby passes over another zone 40 of the work surface 22 in order to remove the dust that has been deposited there. It can be seen that the zone 40 always occupies only a fraction of the work surface. The nozzles 34 located in the zone 40 may not form partial flames 36, but, as is shown in Figs. 4 and 5, this has hardly any influence on the geometry of the united flame 38 - especially at the surface of the bottle 12 - because the gap in flame is filled up by a corresponding widening of the adjacent partial flames 36. A certain reduction in the total height of the flame 38 and, accordingly, a corresponding reduction of the width of the scanned surface of the bottle 12 may occur only, if at all, in those phases in which the nozzle 32 is located at the top or bottom end of the work surface 22. If this is not desired, the timing control may however be arranged such that the cleaning phases in which the nozzle 32 is positioned at the top or bottom end of the work surface 22 occur always in the time intervals in which the pivoting rig 24 (Fig. 1) swivels back in order to adjust the torch onto a new bottle.

It should be observed in this context that the individual cleaning phases during which a single zone 40 is cleaned will only have a short duration, especially when the compressed air is supplied in the form of short pulses. Such a pulsed discharge of the compressed air will at the same time permit a high cleaning effect in combination with a small consumption of compressed air, and will cause, during each pulse, only a short-term and therefore negligible disturbance of the flame profile.

## Claims

1. A method for cleaning a work surface (22) of a torch (10) which serves for flame treatment of objects (12) **characterised in that** the cleaning of the work surface (22) is performed during operation of the torch (10) in several phases in a time succession, and **in that** only a fraction (40) of the work surface is cleaned in each phase.

2. The method according to claim 1. for cleaning a work surface that is elongated in a longitudinal direction, wherein a cleaning device (32) is moved along the work surface (22) in that longitudinal direction.

3. The method according to claim 2, wherein the cleaning device is moved intermittently.

4. The method according to any of the preceding claims, wherein the work surface (22) is cleaned with compressed air.

5. The method according to claim 4, wherein the compressed air is discharged in pulses.

6. The method according to any of the preceding claims, wherein at least some of the cleaning phases take place during a time in which an object (12) is flame-treated.

7. The method according to any of the preceding claims, for cleaning a torch (10) in a flame treatment assembly in which the objects (12) are moved past the torch (10) one after the other, wherein at least some of the cleaning phases take place at times at which, after one object (12) has been flame-treated, a new object (12) is positioned in front of the work surface (22) of the torch.

8. A flame treatment assembly for flame treatment of objects, in particular with a silicatising flame (38), comprising at least one torch having a work surface (22) to be directed towards the object (12) to be treated, **characterised by** a cleaning device (32) that is adjustable relative to the work surface (22) and is arranged to act upon only a fraction (40) of the work surface (22) in each position.

9. The flame treatment assembly according to claim 8, wherein the cleaning device (32) is a compressed-air nozzle.

10. The flame treatment assembly according to claim 8 or 9, wherein the cleaning device (32) is arranged relative to the torch (10) such that it is capable of operating on the work surface (22) during a flame treatment operation.
